Europäisches Patentamt

European Patent Office

Office européen des brevets

(19)

(11) EP 1 035 664 A1

(12) **EUROPEAN PATENT APPLICATION**

(43) Date of publication:
**13.09.2000 Bulletin 2000/37**

(51) Int Cl.7: **H04B 7/185**

(21) Application number: **99301909.0**

(22) Date of filing: **12.03.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ICO Services Ltd.**
**London W6 9BN (GB)**

(72) Inventors:
• **Wyrwas, Richard**
**London N14 6LN (GB)**

• **Hardwick, John**
**Middlesex TW14 9QP (GB)**
• **Riley, Michael John**
**Berks RG42 4EZ (GB)**

(74) Representative: **Musker, David Charles et al**
**R.G.C. Jenkins & Co.**
**26 Caxton Street**
**London SW1H 0RJ (GB)**

(54) **Satellite communication system with interference mitigation**

(57) A satellite communications system comprising at least one satellite (4) in orbit about the Earth, and being arranged to receive a signal comprising a user uplink signal from a user terminal (2) adjacent the Earth, in the presence of co-channel interference from at least one interference source (121) adjacent the Earth, said at least one interference source having a linear polarisation orientation, the system further comprising means for interference mitigation (28, 37, 60, 80) characterised by said means being arranged to selectively exclude a component of said received signal having an orientation of polarisation related to that of said co-channel interference so as to improve the reception of the user uplink signal relative to that of said co-channel interference.

FIG.1.

EP 1 035 664 A1

**Description**

FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

Because of the altitude of the satellites, the distance travelled by a signal from the user terminal to the satellite, and from the satellite to the Earth station, is much longer than the distance between a terrestrial user terminal and its local based station. According, the attenuation undergone by the signal is substantially higher.

In the user terminal uplink direction, the power available from some types of terminal (such as handsets) is very limited, and the gain of the antennas may be very low. As the satellite has somewhat higher power, the signal level on the user downlink is somewhat larger. In the feeder link between the Earth station and the satellite, more power and higher gain antennas are available. Accordingly, the user terminal uplink is, in many cases, the link on which the signal is most susceptible to noise.

In addition to the thermal noise radiated by the planet on which the terminals are located, each user terminal may interfere with transmissions from others (despite nominally occupying a different time or frequency channel) due to errors or spreading in time and frequency.

Furthermore, although radio frequency usage is regulated, the fact that satellite systems cover the whole or a substantial part of the world makes it likely that in at least some areas, the frequencies used on the user link will also be used by terrestrial transmitters, which are therefore, from the point of view of the satellite system, interference generators.

Such interferers may be of several different types, and may be broad band or narrow band; random or repetitive; high power or low power and so on.

EP 0519021 discloses a method of reducing interference between terrestrial and satellite communications systems by controlling the power levels in the terrestrial system.

WO 96/031016 discloses a method of preventing interference between two satellite systems by predicting the zone where interference will occur and inhibiting transmission into that zone by one of the systems.

Other known techniques for avoiding the problem of interference include avoiding the interfering frequency altogether, or to include error correction codes in the uplink transmissions. However, the former technique results in restricting the available spectrum, whilst the latter significantly increases the complexity of the system.

An object of the present invention is to reduce the effects of interference, particularly in the user terminal uplink direction of a satellite communication system.

According to the present invention there is provided a satellite communications system comprising at least one satellite (4) in orbit about the Earth, and being arranged to receive a signal comprising a user uplink signal from a user terminal (2) adjacent the Earth, in the presence of co-channel interference from at least one interference source (121) adjacent the Earth, said at least one interference source having a linear polarisation orientation, the system further comprising means for interference mitigation (28, 37, 60, 80) characterised by said means being arranged to selectively exclude a component of said received signal having an orientation of polarisation related to that of said co-channel interference so as to improve the reception of the user uplink signal relative to that of said co-channel interference.

By varying the polarisation of reception of the user terminal uplink signal, the present invention allows the interfering effect of a linearly polarised co-channel interferer to be diminished, thus improving the signal-to-interference ratio of the uplink signal.

Other aspects and preferred embodiments of the invention are as described or claimed hereafter, with advantages which will be apparent from the following.

BRIEF DESCRIPTION OF THE DRAWINGS

Embodiments of the invention will now be described, by way of example only, with reference to the accompanying drawings, in which:

Figure 1 is a block diagram showing schematically the elements of a first communications system embodying the present invention;
Figure 2a is an illustrative is a block diagram showing schematically the elements of mobile terminal equipment suitable for use with the present invention; and

Figure 2b is a corresponding block diagram;

Figure 3 is a block diagram showing schematically the elements of an Earth station node forming part of the embodiment of Figure 1;

Figure 4 illustrates schematically the beams produced by a satellite in the embodiment of Figure 1;

Figure 5 illustrates schematically the disposition of satellites forming part of Figure 1 in orbits around the Earth;

Figure 6 is a diagram illustrating schematically the geometry of some interference sources;

Figure 7 is a diagram showing schematically the spectral distribution of frequency carriers on a user downlink beam;

Figure 8 is a diagram showing schematically the structure of a TDMA frame on one of the carriers of Figure 6;

Figure 9 is a diagram showing schematically the arrangement of one antenna of a satellite according to the first embodiment;

Figure 10 is a flow diagram illustrating the method of interference mitigation according to the first and second embodiments;

Figure 11 is a diagram showing schematically the arrangement of one antenna of a satellite according to the second embodiment;

Figure 12a is a diagram schematically illustrating the signal processing stages of the interference mitigation method of the second embodiment;

Figure 12b is a schematic vector diagram illustrating the polarisation of an uplink user signal and an interference signal;

Figures 13a and b are diagrams schematically illustrating linearly polarised signals described in the first, second and third embodiments;

Figure 14 is a diagram showing schematically a user terminal antenna of the third and fourth embodiments; and

Figure 15 is a flow diagram illustrating the method of interference mitigation according to the third embodiment;

## GENERAL ASPECTS OF EMBODIMENTS

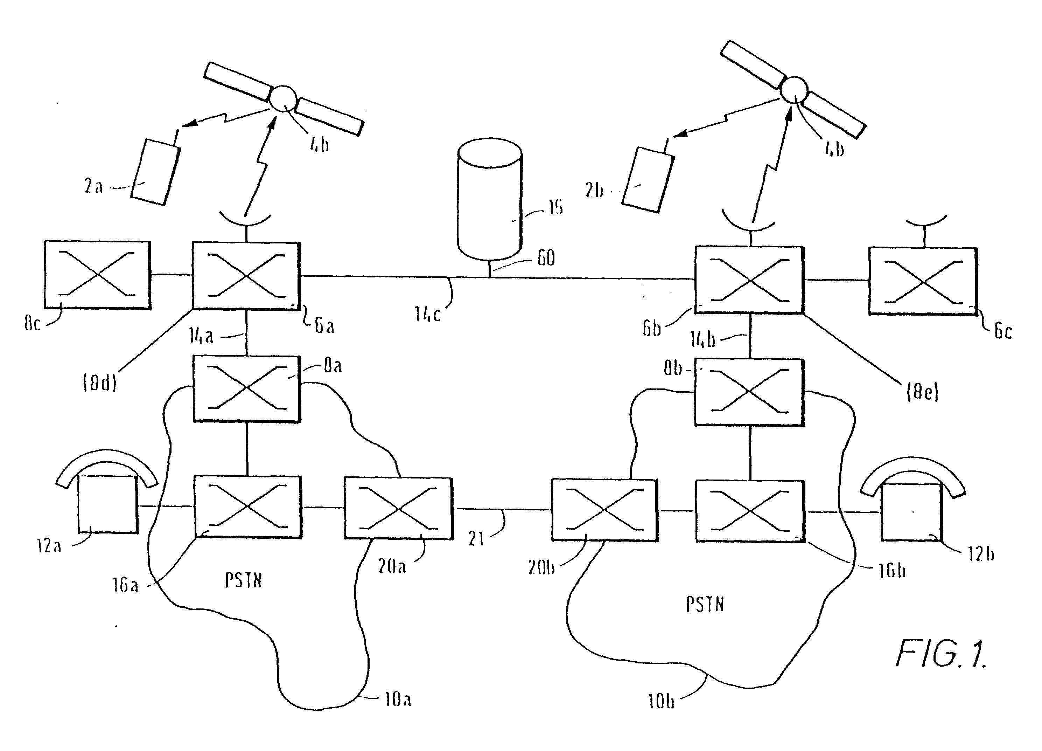

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising channels 14a, 14b, 14c. The satellites 4, Earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

## Terminal 2

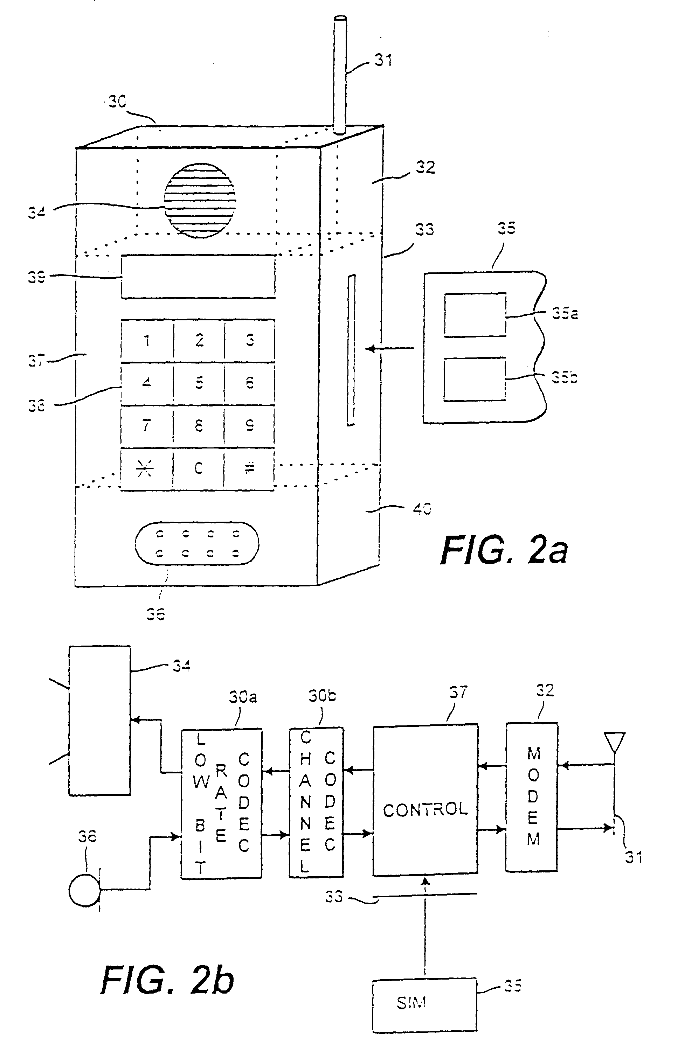

Referring to Figures 2a and 2b, a user terminal equipment 2 of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM memory 35b stores various subscriber identity data including the international mobile subscriber identity (IMSI), which is a unique number associated with that SIM (and hence the subscriber to whom it belongs).

Earth Station Node 6

The Earth station nodes 6 are arranged for communication with the satellites.

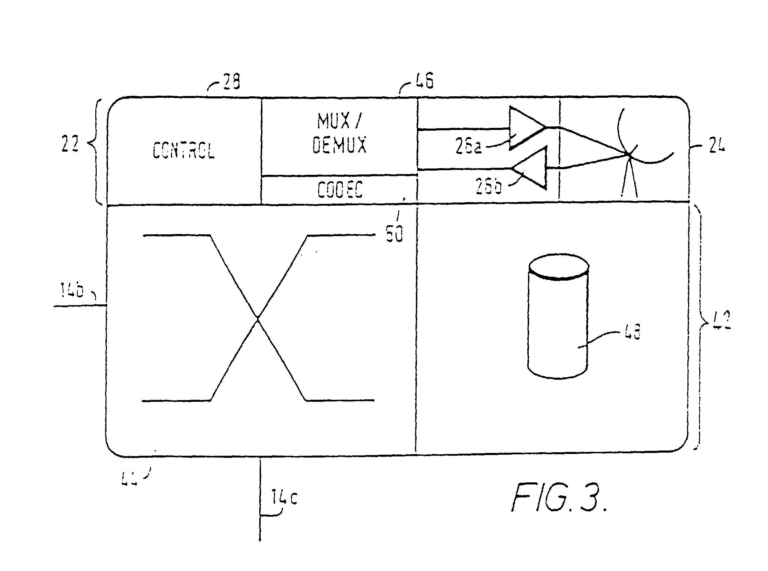

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via a low bit-rate voice codec 50. Finally, the Earth station node 6 comprises a local store 48 storing details of each mobile terminal equipment 2 within the area served by the satellite 4 with which the node 6 is in communication. The local store 48 acts to fulfil the functions of a visited location register (VLR) of a GSM system, and may be based on commercially available GSM products. Alternatively, satellite control may be provided from a separate control station.

The gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch arranged to interconnect incoming PSTN lines from the PSTN 10 with dedicated service lines 14 connected to one or more Earth station nodes 6.

Also provided in the gateway stations 8 is a store for billing, service and other information relating to those mobile terminals 2 for which the gateway station 8 is the home gateway station.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and transmit these to the database station 15, which calculates the rough terrestrial position of the mobile terminal apparatus 2 using the differential arrival times and/or Doppler shifts in the received signal, and knowledge of which beams of which satellites 4 the signal was received through. The position is then stored in the database 48.

Satellites 4

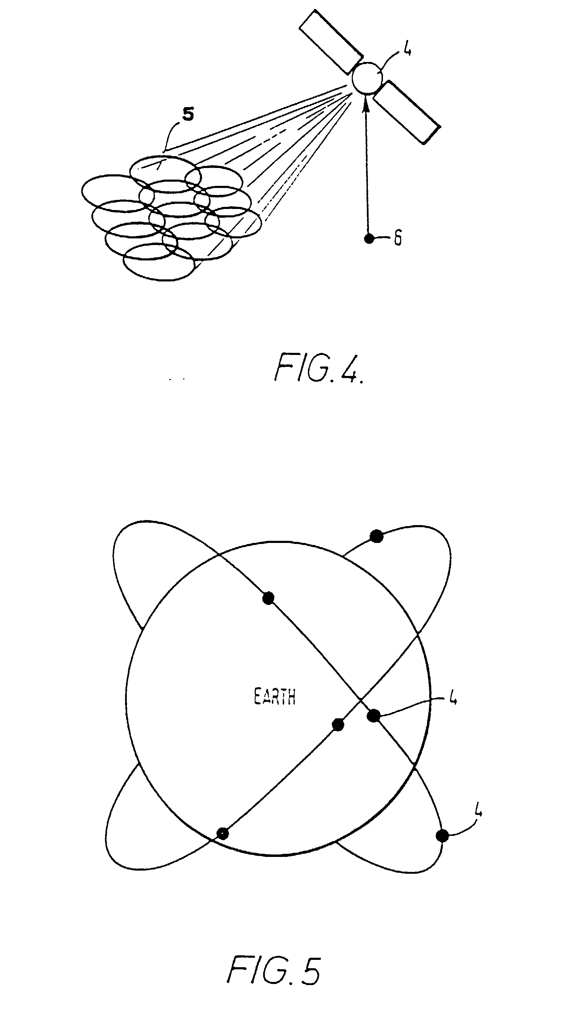

The satellites 4a, 4b comprise generally conventional communications satellite bus such as is used in the HS601 available from Hughes Aerospace Corp, California, US with a communications payload, and may be as disclosed in GB 2288913. Each satellite 4 is arranged to generate an array (typically hexagonal) of beams each beam being generated by a separate antenna ,as described in EP 421722A. The beams cover a footprint beneath the satellite, each beam including a number of different frequency channels and time slots, as described in GB 2293725 and illustrated in Figure 4.

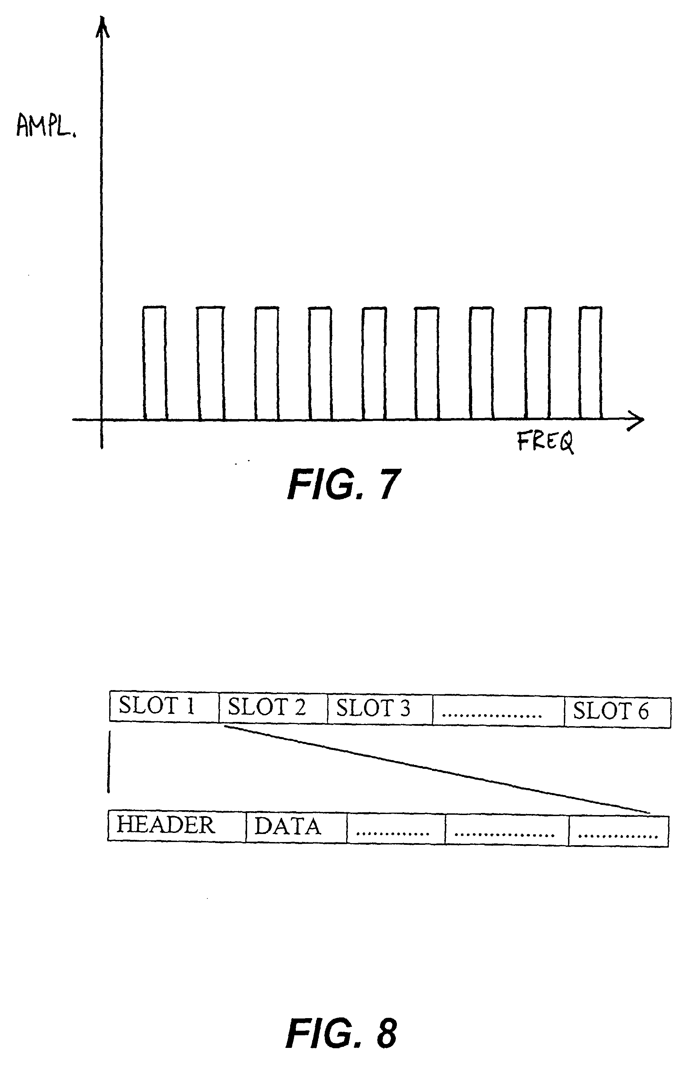

On each beam, the satellite therefore transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 19, 37, 61, 121 or 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, referring to Figure 8, each uplink and downlink frequency carries a plurality (e.g. 6) of time division channels, so that each mobile terminal 2 communicates on a channel comprising a given time slot in a given uplink and downlink frequency. The time slots are separated by a short guard interval.

Within each beam there is also provided a downlink common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy, using Earth based observations and/or by the use of a global positioning system (GPS) receiver in each satellite 4. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 can calculate position data of a transmitting source from its signal propagation delay and its Doppler shift in the uplink signal.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

FIRST EMBODIMENT

User Terminal

As discussed above, Figure 2a shows a user terminal 2 suitable for use in the present embodiment is shown. In this embodiment the antenna 31 of the user terminal 2 is a quadri-filar helix. However, any other suitable antenna which may be arranged to transmit a circularly polarised uplink signal, such as a microstrip patch antenna.

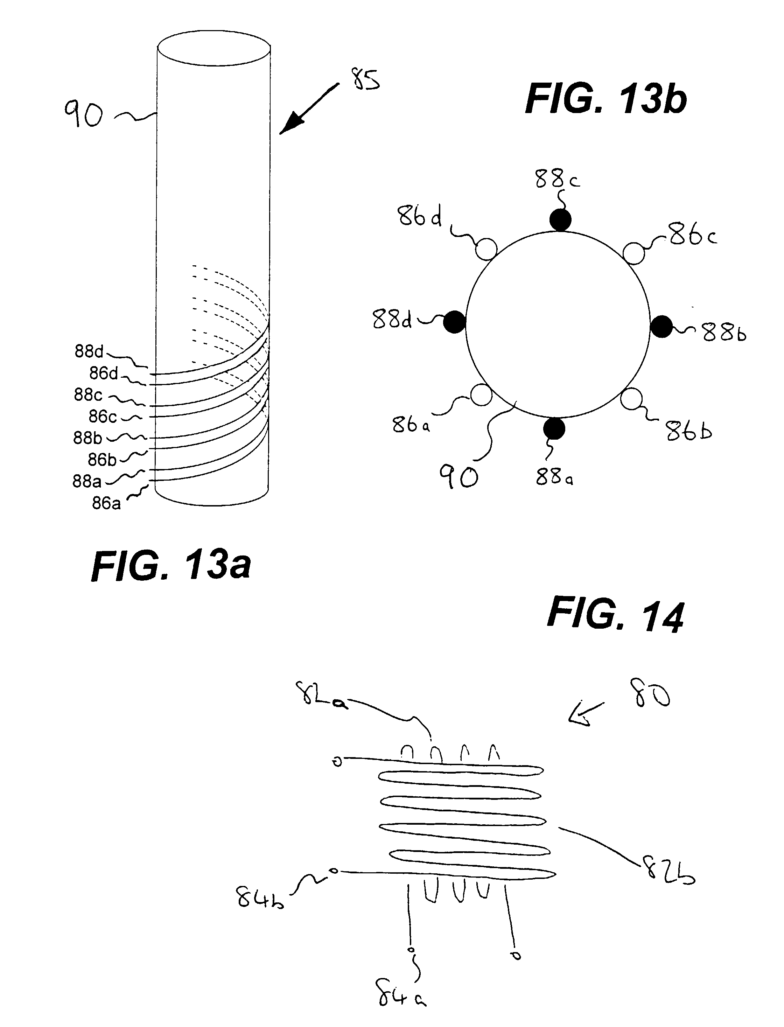

Referring to Figure 13a, a nested quadri-filar helix antenna 85 is illustrated. A suitable quadri-filar helix antenna and a method for manufacturing a quadri-filar helix antenna are disclosed in EP 0715369 (application number 94 308939.1) and EP 0856906 (application number 97 02221.4), respectively, both of which are incorporated herein by reference.

The antenna is made up of eight helically arranged antenna elements wound on a cylindrical former 90. Four of these elements 86a-d are arranged to transmit an uplink signal. The remaining four elements 88a-d are arranged to receive a downlink signal from a satellite 4. Both the uplink and the downlink signals are circularly polarised. The transmit and receive helices are of different lengths, which enables them to work of distinct frequencies.

The transmit helices 86a-d are driven with a quartet of signals of equal amplitude and staggered at 90 degree intervals to generate a circularly polarised wave; the sense of circular polarisation (be it left or right handed) is determined by the phase order of the helices driving signals.

The receive helices 88a-d are arranged in a similar fashion to the transmit helices. This arrangement is more clearly shown, for both the transmit and the receive helices in Figure 13b which is a lateral cross section of the antenna shown in Figure 13a.

Satellite Antenna

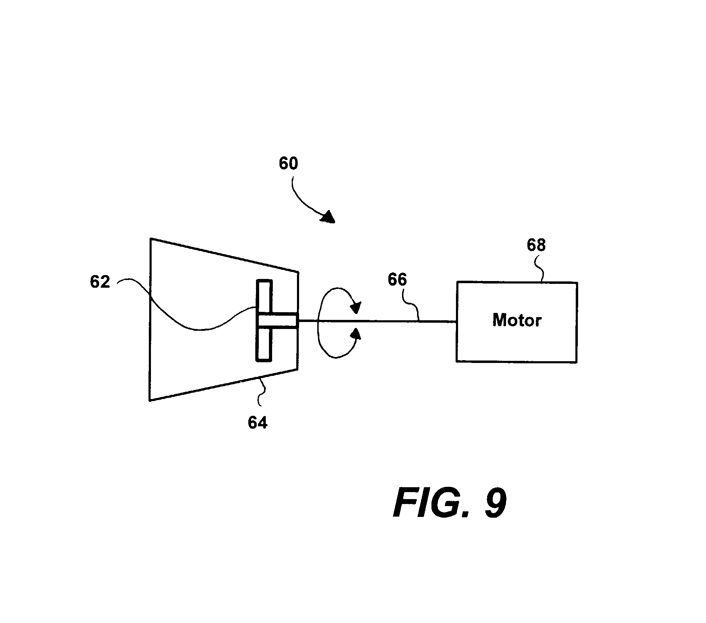

As discussed above, the satellite in this embodiment is as generally known in the art of satellite communications, with a stabilised antenna array composed of multiple individually controllable antenna. However, for the sake of clarity, one antenna of the array is briefly described below. Referring to Figure 9, an antenna arrangement, generally designated by the numeral 60, suitable for use in a satellite of the present embodiment is schematically illustrated.

The dipole radiator 62 of the satellite antenna 60 is mounted in a horn 64, which serves to increase the directionality of the transmitted and received signals. The dipole length is selected to be a certain fraction, such as 1/2, of the radiation wavelength for which the system is designed to function.

The mounting of the dipole 62 in the base of the horn 64 allows the dipole 62 to be freely rotated as indicated by the arrow in Figure 9.

It will be seen from Figure 9 that the dipole 62 is connected by a shaft 66 to a small bi-directional electric motor 68. The motor 68 is powered by the batteries and solar cells of the satellite. Due to the low inertia of the dipole 62 and the shaft 66 and the low drive speeds required, the motor 68 may be of low power.

Mode of Operation

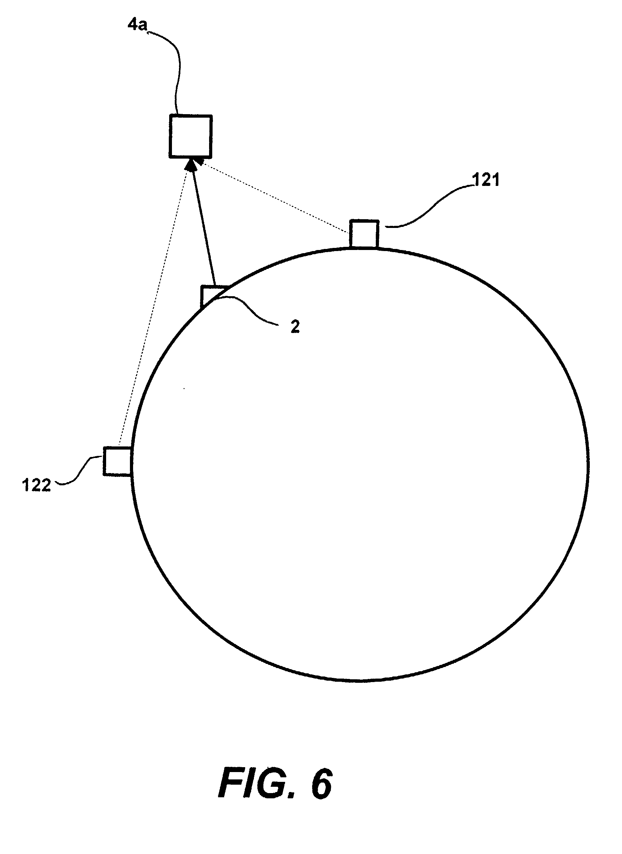

Referring to Figure 6, the effects of interferers 121, 122 is shown on a system comprising a mobile terminal 2 and a satellite 4. The interferers 121, 122 may be, for example, television broadcasting stations, terrestrial mobile communications base stations; terrestrial fixed link microwave repeaters; or terrestrial mobile communications terminal equipment. In general, a priori knowledge of the position of at least some interferers 121, 122 is not available.

In Figure 6, the footprint 5 of one beam (shown in Figure 4) of the satellite 4 covers both the user terminal 2 and an interferer 121. As has been discussed above, if the interferer radiates in the direction of the satellite antenna 60, at the same frequency as a user terminal 2 of the system of the present embodiment, the uplink signal of the user terminal 2 will to some extent be masked.

The number and characteristics of interfering signals will vary depending upon the location of the footprint on the Earth's surface and the slant angle of the beam. Due to the spherical curvature of the Earth, the footprint of different beams generated by the satellite 4 on the Earth's surface vary in size. The centre-most beam, encompassing the sub-satellite point below the satellite is circular, whereas beams towards the edge of the pattern become progressively more elongate, their effective area becoming increasingly large. Thus, the antennas of edge beams tend to be exposed to a greater number of interferers than when the footprint is directly under the satellite.

Furthermore, in the edge beams when the slant angle is low, interference sources which transmit at angles close to parallel to the surface of the Earth, such as microwave repeater stations may effectively transmit in a direct line of sight to the satellite antenna 60, this increases the level of the interfering signal to which the satellite antenna 60 is exposed.

For each beam, the average value of uplink signal-to-interference ratio is calculated. This is carried out by measuring the bit error rate of the uplink signal using standard techniques known to the skilled reader. As the level of interference increases so will the bit error rate. Therefore, the bit error rate may be used as a good approximation to the relative levels of the signal and interference; i.e. the signal-to-interference ratio.

Alternatively, other suitable determinants of the signal-to-interference ratio may be used. For example, as the types of interference of concern, such as terrestrial television broadcasts, have a readily identifiable repeating format, they may be easily identified using auto-correlation techniques well known to the skilled reader. Similarly, the uplink signal format is known to the system. Therefore, the relative levels of the signal and interference may be determined using standard frequency spectrum analysis techniques.

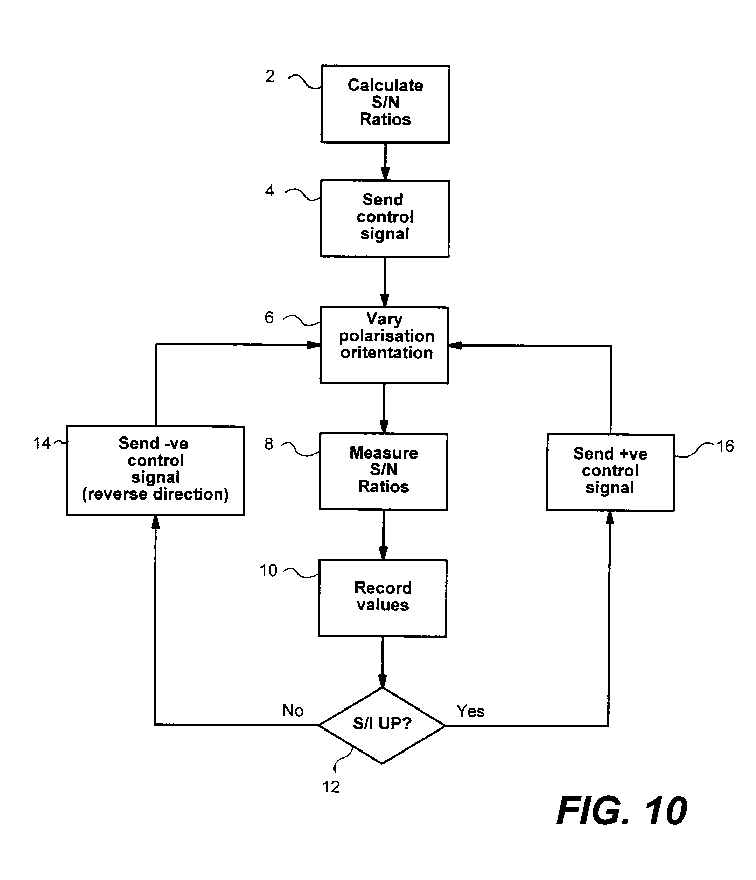

Referring to Figure 10, the method of interference mitigation according to the present embodiment will now be described.

The signal-to-interference ratio of each channel (user terminal uplink signal) associated with the antenna 60 is calculated at step 2. The earth station 6 sends a control signal, generated by the control unit 28, via earth node antenna 24 to the satellite 4, at step 4. The effect of the control signal is to activate the motor 68 to rotate the dipole 62 by a predetermined angular increment to change the angle of polarisation of the signal which is passed by the dipole 62. This occurs at step 6 and on commencement of the process the direction of rotation of the dipole 62 at this step may be arbitrarily selected.

After the rotation of the dipole 62, the user terminal uplink signals for each channel in use and the associated interference levels are again monitored to generate new signal-to-interference ratios, at step 8. At step 10, the average value of the new signal-to-interference ratios is recorded, together with the angle or orientation of the dipole 62. At step 12, the new value of the average signal-to-interference ratio is compared with the average obtained with the previous antenna orientation.

If at step 12 it is calculated that the new polarisation orientation angle has caused the signal-to-interference ratio to fall, then the control unit 28 sends a further control signal, at step 14, to the satellite 4 to cause the motor 68 to vary the angle of polarisation by rotating the dipole 62 by the same angular increment in the reverse direction at step 6.

If at step 12, the comparison between current and previous signal-to-interference ratios indicates that the new polarisation orientation angle has increased the signal-to-interference ratio, then at step 16 the control 28 sends a further control signal to the satellite 4, to cause the motor 68 to vary the angle of polarisation by rotating the dipole 62 in the same direction as previously at step 6, again by the same angular increment.

A maximum value of signal-to-interference ratio is thus reached after a certain number of iterations of this loop, when the signal-to-interference ratio falls if the antenna is rotated in either direction. However, this polarisation angle adjustment loop is proceeded with continuously in order to be able to adapt to changing interference situations, which will arise as the satellite orbits the Earth.

It will be understood that the effect of polarising the satellite antenna 62 to an orientation which excludes an interfering signal is likely to reduce the level of a linearly polarised uplink signal also. However, since in this embodiment the uplink signal is circularly polarised, the uplink signal is not nulled.

## SECOND EMBODIMENT

The second embodiment provides the same function as that of the first embodiment and has many features in common with the first embodiment, which will not be discussed further. However, in this embodiment the polarisation of the satellite antenna 31 is achieved electronically rather than mechanically. A non-rotatable crossed dipole satellite antenna is used instead of the dipole arrangement 62 described above. Consequently, there is no requirement for the motor 68 in this embodiment.

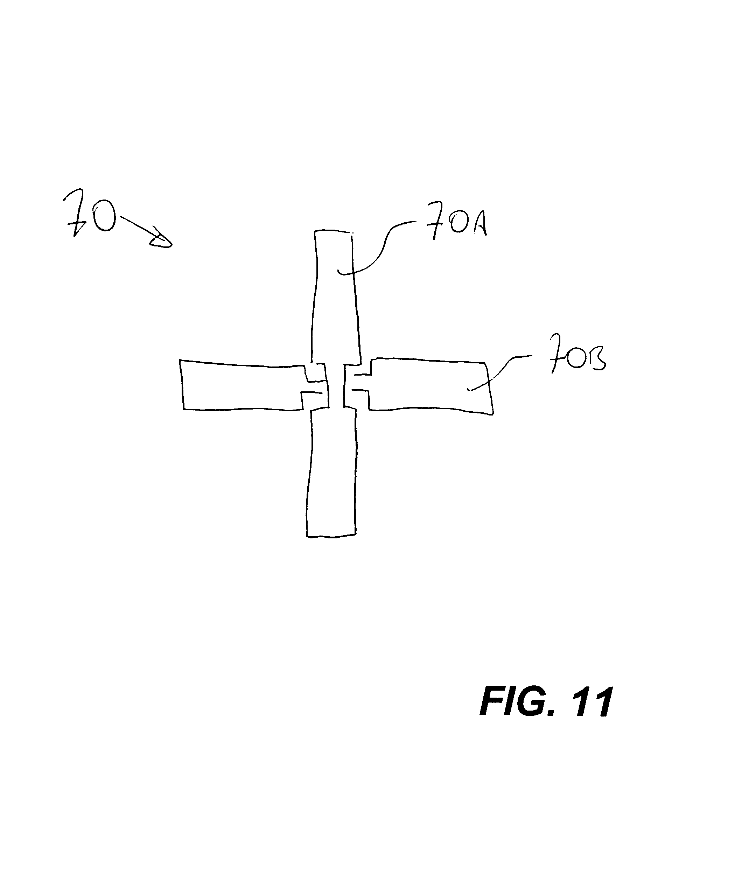

Referring to Figure 11, a crossed dipole antenna is illustrated. The antenna 70 consists of orthogonally arranged dipole elements 70a and 70b. A signal incident on the antenna 70, irrespective of orientation of polarisation, may be electronically resolved along the two orthogonal dipole elements 70a and 70b, and outputted as AC voltages.

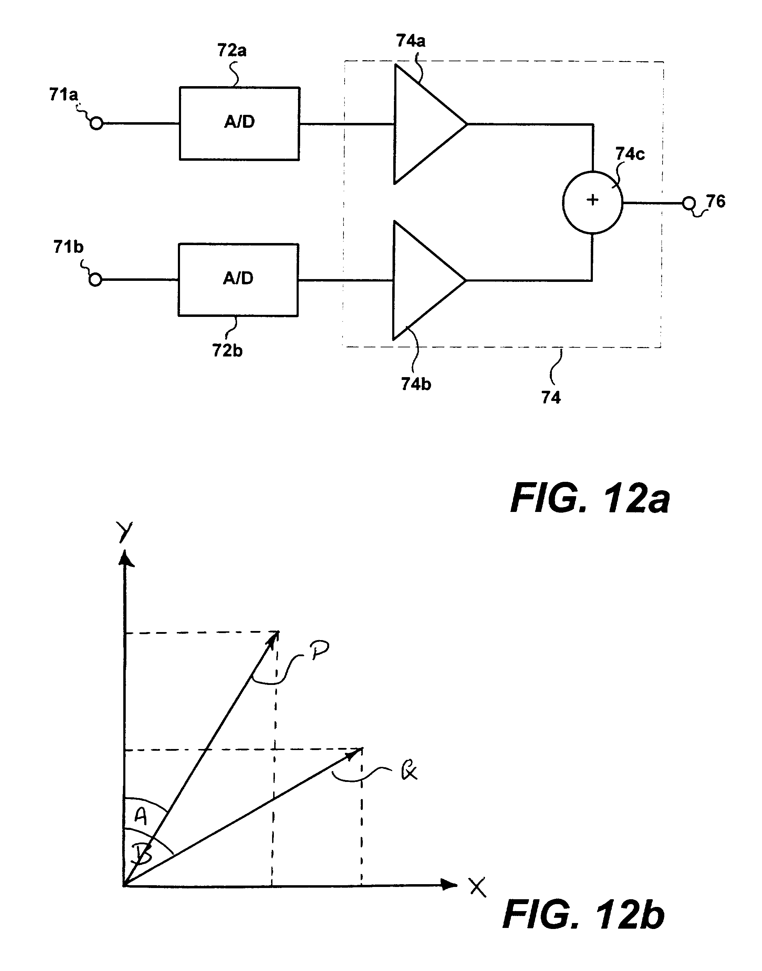

Referring to Figure 12a, the outputs of dipole elements 70a and 70b are connected at 71a and 71b to respective analogue to digital converters 72a and 72b and outputted as digital signals. The digital bit streams from analogue to digital converters 72a and 72b are then operated on at stages 74a and 74b respectively before being combined by addition at stage 74c. In the present embodiment, the functions of stages 74a, 74b and 74c are carried out by a signal processor 74. Thus a single output signal is output at the signal processor output 76.

The operation at each of stages 74a and 74b is one of simple multiplication. In this embodiment the control unit 28 sends a control signal to the signal processor 74 defining the desired polarisation orientation angle, in order to null a given interferer. The processor 74 then resolves the angle of polarisation along the dipole elements 70a and 70b by calculating the sine and cosine of the angle. The calculated sine and cosine values are then used as the multiplier values at stages 74a and b; the stages 74a and b taking the sine or cosine value which corresponds to the resolution of the polarisation angle along the respective dipole element 70a and b.

Referring to Figure 12b, an interferer signal with a polarisation orientation angle B (with reference to the "y" axis) and magnitude "J" is represented by vector Q and the "x" and "y" axes represent dipole elements 70b and 70a of antenna 70, shown in Figure 11.

Therefore, the output signal of dipole 70a at output 71a is the sum of a component of the circularly polarised uplink user signal together with the resolved component of the interferer signal along the "y" axis, which is JCosB.

The output signal of dipole 70b at output 71b is the sum of a component of the circularly polarised uplink user signal together with the resolved component of the interferer signal along the "x" axis, which is JSinB.

However, by virtue of the fact that the user terminal uplink signal is circularly polarised in this embodiment, the angle of polarisation of the satellite antenna 70 will not affect the strength with which it is received.

The multiplier values at stages 74a and 74b are set respectively set to CosA and SinA, where A is the angle at which the signal received by the satellite antenna is to be polarised. This angle is set by the control unit 28 as previously discussed and may initially be arbitrarily set.

Therefore, signal values for the interference signal at the outputs of dipoles 70a and 70b are, JCosACosB and JSinASinB, respectively.

Thus, after being summed at stage 74c, the combined interference signal at output 76 is: J (CosACosB + SinASinB)

This simplifies to: JCos (A-B).

Thus the combined output signal at 76 corresponds to the received uplink signal, together with the interference signal reduced by a factor equivalent to the cosine of the angular difference between the polarisation angle dictated by the control unit 28 and the polarisation angle of the interfering signal.

Thus, the greater the in angular difference between the polarisation angle set by the control unit 28 and that of the interference signal, the greater will be the reduction in signal strength of the interfering signal, until at a difference of 90° it will be completely nulled out. Thus, the uplink signals are effectively electronically filtered by a linear polariser of desired orientation angle at the signal processor output 76.

It will be appreciated that the mode of operation of the present embodiment, excepting the method of polarisation, is as described above with reference to Figure 10. However, it will be appreciated that step 6 of Figure 10, in this embodiment, relates to varying the polarisation orientation angle electronically instead of mechanically, as described above.

The skilled reader will appreciate that other forms of electronic polarisation, using for example Fast Fourier Transforms, are also applicable to the present embodiment.

## THIRD EMBODIMENT

The third embodiment is in broad terms similar to the first and second embodiments. However, in addition to the interference mitigation methods described in the these embodiments, the third embodiment allows the polarisation characteristics of the user terminal uplink signal to be controlled. This allows the signal-to-interference ratio of the uplink signal to be further increased. Features and functions of this embodiment which have already been described with reference to the previous embodiments will therefore not be further discussed in detail.

User Terminal

The user terminal suitable 2 suitable for use in this embodiment is, with the exception of the antenna arrangement and associated electronics, as previously described.

Whereas the quadri-filar helix antenna 86 (shown in Figures 13a and b) of the first and second embodiments gives rise to a circularly polarised uplink and downlink signal, the uplink and downlink signals of the present embodiment are linearly polarised. The use of linear polarisation gives rise to the possibility of yet further increasing the signal-to-interference level of the uplink signal, since for a given transmitted signal power, a circularly polarised signal will be received at a level 3dB lower than an equivalent linearly polarised signal. This is achieved by matching the polarisation angle of the user terminal uplink signal with the angle at which the received signal is polarisation at the satellite 4. For the case of electronic polarisation, as in the second embodiment, this is described below:

Referring once again to Figure 12b, an uplink user signal with a polarisation orientation angle A (with reference to the "y" axis) and magnitude "I" is represented by vector P, an interferer signal with a polarisation orientation angle B (with reference to the "y" axis) and magnitude "J" is represented by vector Q and the "x" and "y" axes represent dipole elements 70b and 70a of antenna 70, shown in Figure 11.

Therefore, the output signal of dipole 70a at output 71a is the sum of the components of the (linearly polarised) user uplink signal and the interferer signal resolved along the "y" axis; i.e. $ICosA + JCosB$,

and, the output signal of dipole 70b at output 71b is the sum of the components of the uplink user signal and the interferer signal resolved along the "x" axis; i.e. $ISinA + JSinB$.

The multiplier values at stages 74a and 74b (described in the second embodiment) are respectively set to CosA and SinA, giving rise to signal values for the for the outputs of dipoles 70a and 70b of:

$$ICos^2A + JCosACosB,$$

and

$$ISin^2A + JSinASinB,$$

respectively.

Thus, after being summed at stage 74c, the combined signal at output 76 is:

$$I(Cos^2A + Sin^2A) + J(CosACosB + SinASinB).$$

This simplifies to:

$$I + JCos(A-B).$$

Thus, the combined output signal at 76 corresponds to the received uplink signal, together with the interference signal reduced by a factor equivalent to the cosine of the angular difference between the polarisation angle dictated by the control unit 28 and the polarisation angle of the interfering signal.

Thus, the greater the difference in angle between the two polarisation angles the greater will be the reduction in signal strength of the interfering signal, until at a difference of 90° it will be completely nulled out. Thus, the uplink signals are effectively electronically filtered by a linear polariser of desired orientation angle at the signal processor output 76.

Referring now to Figure 14, a user terminal antenna 80 suitable for use with this embodiment of the invention is illustrated.

The user terminal 2 in this embodiment has two separate microfilm patch antennas of the type generally known in the art; one being arranged to transmit the uplink signal, the second being to receive the downlink signal.

The two antennas are of differing dimensions which allows them to operate at distinct frequencies, one for the uplink and the second for the downlink.

Antennas of this design are suitable for handheld mobile terminal use, being small in size, of relative low cost and flat, thus not obstructing the use of the user terminal.

The patch 80 consists of a vertically polarised (with respect to the user terminal) sub-element 82a and an overlapping horizontally polarised sub-element 82b. Each sub-element is independently driven via respective feeds 84a and 84b. The relative phases and amplitudes of the feed signals are variable to determine the desired mode of coupling of the transmitted radio waves.

The vertical sub-element 82a and the horizontal sub-element 82b are driven in phase to obtain linear polarisation. By varying the relative amplitudes of the signals driving sub-elements 82a and 82b, the desired angle of orientation of linear polarisation may be obtained. The relative polarity of the feed signals determines whether the angle of polarisation is positive or negative with respect to the horizontal axis, for example.

In the present embodiment, the user terminal 2 is additionally arranged to pass an electronically polarised received signal through the receive antenna, the orientation angle of which corresponds to that of the downlink transmission. This is achieved in the same manner as previously described with reference to the second embodiment, except whereas the second embodiment used two orthogonal dipole elements 70a and 70b to provide the two digital bit stream outputs, they are provided in this embodiment by the vertically and horizontally polarised sub-elements of the receive patch antenna, similar to those of the transmit antenna 80 shown in figure 13. The polarisation orientation angle of the transmit and receive patches is controlled by the control circuit 37 in the user terminal 2.

Although, patch antennas are described in this embodiment, the skilled reader will appreciate that any other suitable antenna which may be arranged to transmit and receive uplink and downlink signals, linearly polarised in a selected orientation may be used.

Satellite Antenna

In the present embodiment either of the satellite antenna arrangements described in the first and second embodiments may be used. Indeed, any other suitable antenna which is arranged to transmit and receive a linearly polarised signal of variable orientation angle may instead be used. Mode of Operation

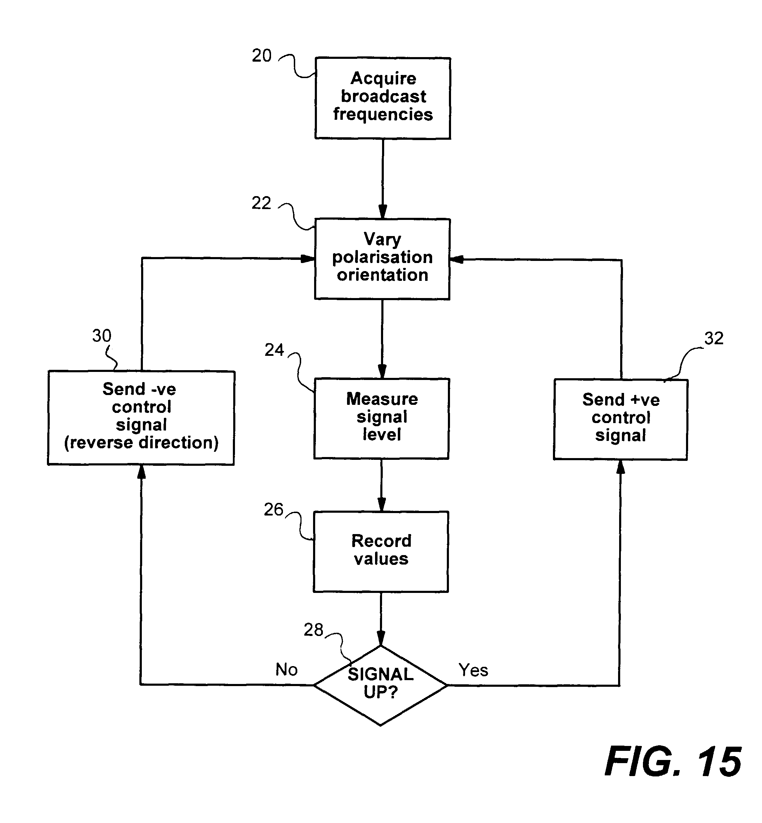

The method of operation of the interference mitigation process according to the third embodiment of the invention will now be described with reference to Figure 15. In this embodiment, the mode of operation of the satellite incorporates the mode of operation of either of the preceding embodiments. The operation of the satellite in this embodiment does not differ from that previously described and so will not be discussed further in detail.

At step 20 of Figure 15, the user terminal 2 is arranged to rapidly cycle through the possible satellite broadcast control frequencies, stored in an internal memory such as the SIM permanent memory 35b in the user terminal 2, until the broadcast control frequency of one or more satellite beams is acquired. This is carried out in a conventional manner employed by cellular communication systems. This is initially done without polarisation filtering the received downlink signal in order to aid the acquisition of the broadcast frequencies present; i.e. by passing signals of all polarisations in the desired frequency range by setting the multiplier values at stages equivalent to 74a and 74b, described in the previous embodiment, to unity.

For each acquired satellite broadcast control frequency in turn, the terminal control circuit 37 implements a routine to determine the current polarisation orientation angle at which the downlink signal is being transmitted relative to the user terminal receive patch. This is achieved by rapidly varying the multiplier sine and cosine values in synchronism at stages equivalent to 74a and 74b of the second embodiment, such that they correspond to a rotating angle of polarisation resolved along the horizontal and vertical elements of the receive patch. This loop process corresponds to steps 6 through 16 of Figure 10, with the one exception that at steps 24 and 28 of Figure 15, it is the downlink signal level and not the signal-to-interference ratio which is respectively measured and checked to determine its change. Therefore, steps 22 to 32 will not be described further.

When the terminal control circuit 37 detects that the downlink signal level has reached a maximum value, due to the downlink signal level falling if the orientation of polarisation is altered in either direction, the terminal control circuit 37 implements the same process on each of the remaining acquired satellite broadcast control frequencies in turn; the maximum value and associated polarisation orientation angle being stored for each at step 26.

When this process has been carried out for each of the acquired satellite broadcast control frequencies, the values recorded for each at step 26 are compared. The channel with the maximum recorded value is selected by the terminal control circuit 37 and the polarisation orientation angle of the receive antenna is adjusted by appropriately setting the sine and cosine multiplier values, at stages equivalent to 74a and b of the second embodiment, to match the corresponding stored angle.

Once the optimum receive polarisation orientation angle is established, the control circuit 37 in the user terminal 2 controls the polarisation orientation angle of the transmit patch to match that of the receive patch. Thus, user terminal 2 is now configured to transmit uplink signals which are linearly polarised at the polarisation orientation angle used by the downlink transmission. As described with reference to the first and second embodiments, the polarisation orientation angle of the satellite antenna 60;70 and used by the downlink transmission is that which maximises the uplink signal-to-interference ratio.

In this embodiment the relative polarisation orientations of the uplink signal and primary interferer need not remain constant. As the satellite antenna polarisation angle is orientated to null the primary linearly polarised interferer, the uplink signal is orientated to match the satellite antenna orientation by tracking the downlink polarisation orientation and is consequently not nulled by the satellite polarisation orientation. Therefore, in a situation where only one co-channel linearly polarised interferer is present, the uplink and the downlink will be orientated to the same linear polarisation angle, which is orthogonal to that of the co-channel interferer; thus increasing the uplink signal-to-interference ratio.

Furthermore, the uplink signal in this embodiment does not suffer from the 3dB reduction in signal level associated with circular polarisation; thus further increasing the uplink signal-to-interference ratio.

As described above, the polarisation angle of reception of the satellite antenna 60;70 continually varies its whilst in operation to increase the measured signal-to-interference ratio of the uplink signal in order that the system is able to adapt to a changing interference environment. Therefore, the terminal control circuit 37 implements the steps 22 to 32 of Figure 15, continually whilst in use to ensure that the polarisation orientation angle of the receive patch tracks the polarisation orientation angle of the downlink transmission which is likely to change with time relative to the user terminal 2, as the satellite orbits the Earth. However, it may also vary either in order to null an interfering signal under the control of control unit 28 of the Earth Station Node 6 at step 16 of Figure 10, or due to movement of the user terminal 2.

Changes in the polarisation orientation angle of the receive patch are immediately copied to the transmitting patch under the control of the user terminal control circuit 37.

It should be noted that because the downlink signal is generally of a significantly higher level than that of the uplink signal, it is of lesser importance to maximise the signal-to-interference ratio of the downlink signal, which is likely to arise at a different orientation angle to that required to maximise the downlink signal level since the sources of interference for the uplink and downlink will usually differ.

This process therefore serves primarily to establish the optimum angle of polarisation for the user terminal to transmit the uplink signal in order to increase the signal-to-interference ratio of the uplink signal and not to maximise the signal-to-interference ratio of the downlink signal, although this may occur to some extent.

In the present embodiment, within each beam the downlink common broadcast control channel continually broadcasts in order that the user terminals 2 are always able to locate those channels, in a similar manner to the continual broadcast of beacon frequencies employed in each cell of a GSM system.

Additionally, as is well known in the field of mobile communications, the terminal control circuit 37 periodically implements the above described satellite broadcast control frequency acquisition procedure in order to ensure that it is continually communicating with the satellite beam giving the highest downlink signal level.

FOURTH EMBODIMENT

The present embodiment functions in broad terms as described with reference to the third embodiment of the invention. Therefore, features and processes which have already been described will not be discussed further. In addition the present embodiment is concerned with the mitigation of linearly polarised co-channel interference which is known a priori, as might be the case in the event that an interferer is part of a large scale commercial activity.

If the presence and characteristics (which may include its location, frequency, directional radiation properties, times of interference generation and polarisation) of an interferer are known, then, because the location of satellite 4 is accurately known by the system intelligence located in the Earth station node 6, the interfering effect on user terminal uplink signals will be known in advance of the satellite beam footprint passing over the area subject to interference. Such information relating to powerful interferers may be available from WARC or similar bodies. Alternatively, it may be gathered using interference mapping techniques such as disclosed in EP 858176A.

In this case, the polarisation orientation angle previously found to be most effective to increase the average signal-to-interference ratio of user terminal uplink signals can be immediately selected without the need to experiment by trial and error, as described above. Thus, in this embodiment the time taken to arrive at the optimum signal-to-interference ratio through polarisation selection can be reduced. This is achieved in this embodiment by storing the stored values of polarisation orientation angle recorded at steps 10 and 26 of Figures 10 and 15, respectively, together with the location of the satellite and the position of the beam footprint in question on the surface of the Earth in the control unit 28 of the Earth station 6.

As previously described, signal-to-interference ratios are continuously monitored, even when the identity of interferers is known for a given area. This is in order to establish that the expected interference is present and that it is the expected interference which is responsible for the primary source of interference which is being experienced. This is achieved through the use of spectral frequency analysis, as mentioned above so that the identity of an interferer may be ascertained, as opposed to its presence alone.

If it is found that the expected interferer is present but it does not account for the majority of the interference present, then the new interferer of primary importance may advantageously be mitigated as previously described.

If it is found that the expected interferer is not present, then it may at least temporarily be ignored. In this instance, interferers which were previously of secondary importance only, which are found to be present, may advantageously be mitigated as previously described.

As has been discussed above, the optimum polarisation orientation angle for the reception of the user terminal uplink signal for a certain beam footprint as it varies with time is stored in the control unit 28 of the Earth station 6. Thus, when a beam footprint again passes over a previously identified interferer, the optimum settings for the satellite antenna associated with the beam in question may be immediately set by retrieving this information from the control unit 28 of the Earth station 6 as part of the antenna steer and control signal.

Similarly, if a previously identified interferer of primary importance starts transmitting when it is within a beam footprint, while the selected polarisation angle has been determined to mitigate an interferer of lesser importance, the optimum polarisation angle to mitigate the interference of primary importance for the satellite antenna may be immediately set; thus saving time over the trial and error approach.

Such a technique works especially effectively where satellites have repeating ground tracks. This is because the effect of an interferer on an uplink signal depends not only upon the beam footprint covering the position of the interferer, but also on the interferer directing the interfering transmission toward the satellite. It will be appreciated that where ground tracks are repeated, the interfering effect can be accurately predicted.

Furthermore, for locations where intermittent powerful interfering signals are experienced, more than one polarisation orientation angle may advantageously be stored, such that if such an identified interferer of primary importance should stop transmitting, the polarisation orientation angle of the satellite antenna concerned may be adjusted quickly to a further known angle which mitigates the interference of an identified interferer of secondary importance.

Additionally, the skilled reader will appreciate that the information stored in the control unit 28 regarding optimum polarisation orientation angles may be used by successive beams as a satellite progresses over the Earth's surface.

## OTHER EMBODIMENTS

It will be clear from the foregoing that the above described embodiments are each merely one way of putting the invention into effect. Many other alternatives will be apparent to the skilled person and are within the scope of the present invention.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Furthermore, the satellite antennas and beam forming apparatus are also purely exemplary. The invention may equally be realised using satellites with phased array and/or steered antennas.

Additionally, it will be appreciated that the invention need not be applied to all beams associated with a satellite, but may, for example only be used in beams where significant interference on the user uplink is encountered.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

**Claims**

1. A satellite communications system comprising at least one satellite (4) in orbit about the Earth, and being arranged to receive a signal comprising a user uplink signal from a user terminal (2) adjacent the Earth, in the presence of co-channel interference from at least one interference source (121) adjacent the Earth, said at least one interference having a predominantly linear polarisation orientation, the system further comprising means for interference mitigation (28, 37, 60, 80) characterised by said means being arranged to selectively exclude a component of said received signal having an orientation of polarisation related to that of said co-channel interference so as to improve the reception of the user uplink signal relative to that of said co-channel interference.

2. The system of claim 1, wherein said interference mitigation means is located in said satellite.

3. The system of claim 1, further comprising an Earth station (6), in which said satellite is arranged to transmit said received signal on a feeder downlink signal to said Earth station (6), and in which said interference mitigation means is on Earth and in communication with said Earth station (6).

4. The system of any preceding claim, wherein said interference mitigation means comprises an antenna rotatable to a selected angle about an axis to selectively exclude a component of said received signal.

5. The system of any one of claims 1 to 3, wherein said interference mitigation means comprises an electronic filter.

6. The system of any preceding claim, further comprising means for periodically deriving values of the ratio of said user uplink signal to said co-channel interference and adjusting said orientation of polarisation in dependence thereon to increase said ratio.

7. The system of claim 6, wherein said satellite is arranged to transmit a downlink signal to said user terminal polarised substantially at said adjusted orientation.

8. The system of claim 7, wherein said user terminal is arranged to detect the adjusted orientation of polarisation.

9. The system of claim 8, wherein said user terminal is arranged to polarise a user uplink signal substantially at the detected orientation of polarisation.

**10.** The system of any preceding claim, wherein said satellite is arranged to form a plurality of beams, co-channel interference associated with each said beam being independently excludable.

**11.** The system of any one of claims 6 to 11, wherein data relating to said polarisation orientation and an associated portion of the surface of the Earth is stored for future interference mitigation.

**12.** The system of any preceding claim, in which said user uplink signal is circularly polarised.

**13.** The system of any one of claims 1 to 11, in which said user uplink signal is linearly polarised.

**14.** A satellite as defined in claim 2 or any one of claims 4 to 13 dependent thereon.

**15.** Apparatus for interference mitigation as defined in any preceding claim.

**16.** A user terminal as defined in claim 9.

**17.** A user terminal according to claim 16, comprising a patch antenna.

**18.** A user terminal according to claim 16, comprising a quadri-filar helix antenna.

**19.** A method of improving the reception of a user terminal uplink signal relative to that of co-channel interference, in a satellite communications system, through use of polarisation.

FIG.1.

EP 1 035 664 A1

*FIG. 2a*

*FIG. 2b*

FIG.3.

FIG.4.

EARTH

FIG.5

**FIG. 6**

**FIG. 7**

**FIG. 8**

**FIG. 9**

2 — Calculate
S/N
Ratios

4 — Send
control
signal

6 — Vary
polarisation
oritentation

14 — Send -ve
control
signal
(reverse direction)

8 — Measure
S/N
Ratios

16 — Send +ve
control
signal

10 — Record
values

No ◄——— S/I UP? ———► Yes

12

*FIG. 10*

**FIG. 11**

**FIG. 12a**

**FIG. 12b**

FIG. 13a

FIG. 13b

FIG. 14

20

**Acquire broadcast frequencies**

22

**Vary polarisation orientation**

30

**Send -ve control signal (reverse direction)**

24

**Measure signal level**

32

**Send +ve control signal**

26

**Record values**

28

No **SIGNAL UP?** Yes

*FIG. 15*

European Patent
Office

**EUROPEAN SEARCH REPORT**

Application Number

EP 99 30 1909

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 00908 A (THOMSON CONSUMER ELECTRONICS) 7 January 1999 (1999-01-07) | 1,19 | H04B7/185 |
| A | * page 3, line 35 - page 6, line 12 * | 2-18 | |
| X | EP 0 348 940 A (NEC) 3 January 1990 (1990-01-03) | 1,19 | |
| A | * claims 1-4 * | 2-18 | |
| X | US 5 712 641 A (CASABONA ET AL.) 27 January 1998 (1998-01-27) | 1,19 | |
| A | * column 2, line 21 - column 3, line 32 * | 2-18 | |

|  | TECHNICAL FIELDS SEARCHED (Int.Cl.7) |
|---|---|
|  | H04B |

The present search report has been drawn up for all claims

| Place of search | Date of completion of the search | Examiner |
|---|---|---|
| THE HAGUE | 17 September 1999 | Bischof, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 1909

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-1999

| Patent document cited in search report | | Publication date | Patent family member(s) | | Publication date |
|---|---|---|---|---|---|
| WO 9900908 | A | 07-01-1999 | AU | 8374798 A | 19-01-1999 |
| EP 348940 | A | 03-01-1990 | JP | 1896252 C | 23-01-1995 |
| | | | JP | 2011032 A | 16-01-1990 |
| | | | JP | 6024342 B | 30-03-1994 |
| | | | DE | 68918176 D | 20-10-1994 |
| | | | DE | 68918176 T | 02-02-1995 |
| | | | US | 4965809 A | 23-10-1990 |
| US 5712641 | A | 27-01-1998 | AU | 1959097 A | 16-09-1997 |
| | | | DE | 19781627 T | 17-06-1999 |
| | | | GB | 2325594 A | 25-11-1998 |
| | | | WO | 9732405 A | 04-09-1997 |

EPO FORM P0459

For more details about this annex : see Official Journal of the European Patent Office, No. 12/82